# EUROPÄISCHE PATENTSCHRIFT

(11) **EP 3 388 857 B1**
(45) Veröffentlichungstag und Bekanntmachung des Hinweises auf die Patenterteilung: **28.08.2019**
(21) Anmeldenummer: 18162358.8
(22) Anmeldetag: 16.03.2018
(51) Int. Cl.: G01S 7/481, G01S 7/497

(54) **LASERSCANNER UND VERFAHREN ZUR ÜBERPRÜFUNG DER FUNKTIONSFÄHIGKEIT**
LASER SCANNER AND METHOD FOR TESTING ITS FUNCTIONAL CAPABILITY
DISPOSITIF DE BALAYAGE LASER ET PROCÉDÉ DE VÉRIFICATION DE LA CAPACITÉ DE FONCTIONNEMENT

(30) Priorität: 10.04.2017 DE 102017107667
(43) Veröffentlichungstag der Anmeldung: 17.10.2018
(73) Patentinhaber: Sick AG, 79183 Waldkirch (DE)
(72) Erfinder: Krämer, Joachim, 79189 Bad Krozingen (DE)

(56) Entgegenhaltungen:
- DE-A1- 19 647 152
- DE-B3-102015 118 258
- DE-C1- 4 341 080
- DE-C2- 4 219 260

## Beschreibung

Die Erfindung betrifft einen Laserscanner und ein Verfahren zur Überprüfung der Funktionsfähigkeit eines Laserscanners nach dem Oberbegriff von Anspruch 1 beziehungsweise 9.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Laserscanner werden nicht nur für allgemeine Messaufgaben, sondern auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

Sicherheitslaserscanner müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

Eine Möglichkeit zur Funktionsüberprüfung ist die Verwendung eines internen Referenzzielsystems, mit dessen Hilfe die fehlerfreie Abstandsmessung und deren unbeeinträchtigte Empfindlichkeit überprüft werden. Das Referenzziel wird in jedem Umlauf der Ablenkeinheit optisch angetastet und das Signalecho im Hinblick auf Signalstärke und Abstandswert ausgewertet. Es ist üblich, einen zusammenhängenden Winkelbereich exklusiv für die Referenzzielmessung zu verwenden. In diesem Winkelbereich befindet sich auch der Träger, an dem die Ablenkeinheit mit Motor, Drehspiegel und Winkelencoder aufgehängt ist. Dadurch wird der Sichtbereich gegenüber den an sich möglichen 360° eingeschränkt.

Die Referenzzielmessung erlaubt die Überwachung und Nachregelung mehrerer Leistungsmerkmale und Messergebnisse. Zunächst erlaubt der Vergleich mit eingelernten Erwartungswerten die Beurteilung, ob die Detektionsfähigkeit des Sicherheitslaserscanners eingeschränkt ist. Dadurch kann die gesamte Signalkette mit allen darin enthaltenen Bauelementen vom Sendepuls bis zur Bestimmung des Abstandswerts geprüft werden, einschließlich der Signalstärke des Sendestrahls, die sich für eine sichere Detektion einerseits und zur Einhaltung des Augenschutzes andererseits innerhalb von vorgegebenen Toleranzgrenzen befinden muss. Zudem kann ein aktuelles Abstandsoffset ermittelt oder nachgeregelt werden, das beispielsweise durch temperaturabhängige interne Signallaufzeitschwankungen verursacht wird. Schließlich sind verschiedene Plausibilitätsprüfungen möglich.

Um alle diese Anforderungen zu erfüllen, wird herkömmlich ein zweigeteiltes Referenzziel mit hoher und niedriger Remission eingesetzt, das entsprechend ein Referenzsignal hoher Signalstärke und ein Referenzsignal niedriger Signalstärke liefert. Eine bekannte Lösung verwendet dafür einen Retroreflektor oder ein Prisma für einen optischen Kurzschluss beziehungsweise ein diffuses Lamberttarget, für das ein gewünschter sehr geringer Signalpegel je nach Remission leicht eingestellt werden kann. Das Lamberttarget erzeugt Streulicht für die Referenzmessung. Das kann zu Problemen führen, denn ein Laserscanner ist insbesondere im rauen industriellen Umfeld über seinen Lebenszyklus wechselnden Umwelteinflüssen wie Temperaturschwankungen, UV-Licht, Verschmutzung und Luftfeuchte ausgesetzt. Dadurch kann zu einer Degradation des Referenzziels selbst oder der an der Weiterleitung des Referenzlichts beteiligten Bauteile kommen. Dadurch wird Streulicht auf undefinierten Wegen zum Empfänger geleitet, oder die veränderten Remissionseigenschaften des Referenzziels sorgen für Abweichungen von den erwarteten Referenzwerten. Eine Streulichtmessung ist also nicht ausreichend langzeitstabil, es besteht die Gefahr von Ausfällen durch Änderungen des Referenzzielwerts.

Es ist auch möglich, die beiden Referenzziele zu kombinieren. Beispielsweise erzeugt ein senkrecht auf das Referenzziel fallender Sendelichtstrahl das starke Referenzsignal. Bei schrägem Einfallswinkel dagegen wird das Sendelicht gestreut und führt so zu einem deutlich geringeren Signalpegel, der als schwaches Referenzsignal genutzt wird. Das hat Vorteile hinsichtlich des Platzbedarfs und der Montage. Es gibt aber auch hier Streulichtanteile mit den geschilderten Problemen. Auch eine unzureichende Homogenität des Sendelichtstrahls kann unerwünschte Schwankungen des Referenzzielwerts nach sich ziehen.

Die DE 196 47 152 A1 offenbart eine Laserabstandsermittlungsvorrichtung mit einem Referenzobjekt, das wenigstens ein Tripelelement aus drei im Winkel von 90° zueinander angeordneten Spiegelflächen aufweist. Dem Tripelelement ist ein Dämpfungsfilter mit sich kontinuierlich ändernder optischer Dämpfung vorgeordnet. Die EP 2 112 527 A2 zeigt ebenfalls ein Referenzziel hier zur Kalibrierung von Laserscannern, das als eine U-förmig zurücklenkende Spiegelkonstruktion mit sich in Scanrichtung des Laserstrahls ändernder Reflektivität ausgebildet ist. In der DE 10 2015 118 258 B3 dient ein Referenzziel für die Erzeugung sowohl eines schwachen als auch eines starken Referenzsignals, indem der Sendelichtstrahl je nach Scanwinkel an der Vorderfläche oder innen an der Rückfläche reflektiert wird. Die Langzeitstabilität der Referenzmessung gerade bei Toleranzen im Sendelichtstrahl ist auch mit diesen Referenzzielen nicht ausreichend gewährleistet.

Die DE 42 19 260 C2 offenbart eine lichtelektrische Vorrichtung mit einem Testobjekt. Mittels einer Ablenkvorrichtung überstreicht der Sendelichtstrahl eine Abtastfläche. Das Testobjekt ist außerhalb der Abtastfläche angeordnet und dient dazu, die Funktionsfähigkeit von Sender und Detektor zu überprüfen. In einer Ausführungsform ist das Testobjekt als Prisma mit einem trapezförmigen Querschnitt ausgebildet. Der Sendelichtstrahl tritt durch eine Basisfläche in das Prisma ein, wird dann innen im Wesentlichen parallel zu der Basisfläche von einer dem Sender zugewandten Seitenfläche zu einer dem Detektor zugewandten Seitenfläche gespiegelt und tritt mit entsprechendem Versatz in umgekehrter Richtung wieder aus der Basisfläche des Prismas aus. Die Spiegelung an der dem Detektor zugewandten Seitenfläche erfolgt diffus.

Aus der DE 43 41 080 C1 ist eine weitere lichtelektrische Vorrichtung mit einem Testobjekt und ähnlichen Grundmerkmalen bekannt. Allerdings weist hier das Testobjekt eine andere Geometrie mit V-förmigem Querschnitt auf, wobei in verschiedenen Ausführungsformen durch Blenden oder Unterbrechungen der lichtumlenkenden Teilflächen der Lichtanteil reduziert wird, der zum Detektor gelangt.

Es ist daher Aufgabe der Erfindung, die Referenzmessung in einem Laserscanner zu verbessern.

Diese Aufgabe wird durch einen Laserscanner und ein Verfahren zur Überprüfung der Funktionsfähigkeit eines Laserscanners nach Anspruch 1 beziehungsweise 9 gelöst. Der Laserscanner weist eine bewegliche, insbesondere drehbare Ablenkeinheit auf, also beispielsweise einen rotierenden Optikkopf mit Lichtsender und Empfänger oder einen rotierenden Drehspiegel, und tastet auf diese Weise periodisch eine Scan- oder Überwachungsebene ab. Bei zusätzlicher Verkippung der Ablenkeinheit wird der Überwachungsbereich zu einem dreidimensionalen Raumbereich. In bestimmten Referenzwinkelstellungen der Ablenkeinheit gelangt der ausgesandte Lichtstrahl oder Sendelichtstrahl nicht in den Überwachungsbereich, sondern trifft auf ein Referenzziel, das ihn als Referenzstrahl zurückwirft. Mit dem entstehenden Referenzsignal wird die Signalkette und damit die Funktionsfähigkeit des Laserscanner überprüft.

Das Referenzziel weist vorzugsweise eine Vorderfläche und zwei Reflexflächen auf, die jeweils eine Krümmung aufweisen können, jedoch bevorzugt flach sind. Der ausgesandte Lichtstrahl tritt an einem Strahleintrittsbereich der Vorderfläche in das Referenzziel ein und wird in dem Referenzziel nacheinander an den beiden Reflexflächen in innerer Totalreflexion zurückgeworfen. Dadurch tritt der Referenzstrahl aus einem Strahlaustrittsbereich der Vorderfläche auf. Das Ergebnis ist ein Referenzstrahl in Gegenrichtung zum ausgesandten Lichtstrahl, mit einem Parallelversetz entsprechend dem Abstand von Strahleintrittsbereich und Strahlaustrittsbereich.

Die Erfindung geht nun von dem Grundgedanken aus, die Divergenz des Referenzstrahls gezielt zu erhöhen, um den Lichtempfänger zu überstrahlen. Deshalb wird der Lichtempfänger auch dann noch getroffen, wenn die Ausrichtung des ausgesandten Lichtstrahls von einer Idealrichtung abweicht. Dazu ist die Vorderfläche, insbesondere im Strahleintrittsbereich und/oder Strahlaustrittsbereich, beziehungsweise mindestens eine der Reflexflächen entsprechend ausgebildet, um den ausgesandten Lichtstrahl aufzuweiten.

Die Erfindung hat den Vorteil, dass die Referenzmessung unempfindlich gegenüber Einbautoleranzen und umweit- oder betriebsbedingten Toleranzen wird. Das vereinfacht zum einen die Fertigung der Bauteile und deren Montage in der Herstellung und sorgt andererseits für eine sehr robuste Messung. Das Referenzziel wirkt über einen großen Winkelbereich der Scanbewegung. Damit kann es sehr schmal bleiben und ermöglicht so eine weitere Miniaturisierung des Laserscanners. Wegen des vergrößerten Winkelbereichs wird über größere Anteile des ausgesandten Lichtstrahls gemittelt, und das ergibt wiederum eine besonders robuste Referenzmessung. Im Gegensatz zu einem herkömmlichen diffus remittierenden Referenzziel und anderen Varianten wird Streulicht eliminiert oder zumindest reduziert, und auch das erhöht die Robustheit und bringt Langzeitstabilität.

Das Referenzziel weist bevorzugt zwei trapezförmige Seitenflächen auf. Dadurch entsteht zwischen den beiden Reflexflächen eine Rückfläche gegenüber der Vorderseite und parallel dazu. Diese Rückfläche ist vorzugsweise optisch nicht wirksam, da die erste Reflexfläche in einem Winkel steht, in dem die Lichtstrahlen parallel zu der Rückfläche verlaufen.

Mindestens eine der Reflexflächen weist vorzugsweise zwei in spitzem Winkel zueinander stehende Teilflächen auf. Die Kante zwischen den Teilflächen verläuft parallel zu den Seitenflächen. Die entsprechende Reflexfläche, vorzugsweise die zweite Reflexfläche, gewinnt dadurch eine Dachkantform. Die Winkel zwischen den Teilflächen und zur anderen Reflexfläche sind vorzugsweise rechte Winkel, so dass das Referenzziel wie ein Tripelreflektor wirkt. In Verbindung mit den Trapezflächen entsteht ein besonderer, langgezogener Tripelreflektor. Das bietet Platz für Toleranzen des eintretenden und entsprechend auch des austretenden Strahls. Die Form des Referenzziels kann als Haus mit Giebeldach beschrieben werden, wobei eine nicht in Teilflächen unterteilte Reflexfläche die Grundfläche und die beiden Teilflächen das Giebeldach bilden. Die Vorder- und Rückfläche ist jeweils fünfeckig, nämlich als Rechteck mit einem aufgesetzten Dreieck an den Kanten zu den Teilflächen. Das Haus ist zudem perspektivisch verzerrt, mit einer größeren Vorderfläche und einer rechteckigen Rückfläche.

Der Strahleintrittsbereich und/oder der Strahlaustrittsbereich weist vorzugsweise mindestens ein aufweitendes optisches Element auf. Dementsprechend wird der ausgesandte Lichtstrahl bei Eintritt in das Referenzziel und/oder der Referenzstrahl bei Austritt aus dem Referenzziel geweitet. Dadurch wird die Referenzmessung besonders robust und unempfindlich gegenüber Intensitätsänderungen im ausgesandten Lichtstrahl.

Das optische Element weist bevorzugt Mikrolinsen oder eine diffuse Streufläche auf. Ein Mikrolinsenfeld beziehungsweise eine Streufläche deckt insbesondere den Strahleintrittsbereich beziehungsweise den Strahlaustrittsbereich ab. Das Referenzziel kann als Spritzgussteil hergestellt werden. Das optische Element lässt sich sehr leicht ins Werkzeug integrieren, so dass es praktisch keinen Mehraufwand bedeutet, die gewünschte Strahlaufweitung zu gewinnen.

Das Referenzziel ist bevorzugt dafür ausgebildet, die Intensität eines zurückgeworfenen Lichtstrahls abzuschwächen. Dazu wird beispielsweise das Referenzziel in einer definierten Weise geschwärzt. Eine Beschichtung ist auch denkbar, jedoch sollte dabei dafür Sorge getragen werden, dass kein störendes Streulicht entsteht. Das dämpfende Referenzziel dient nur einer Referenzmessung mit schwachem Pegel. Die herkömmliche zweite Referenzmessung mit starkem Pegel kann durch ein geeignetes Messverfahren, insbesondere ein Pulsmittelungsverfahren wie einleitend kurz vorgestellt, und eventuell andere Tests entfallen, mit denen sichergestellt wird, dass sehr starke Signalpegel keine Fehler verursachen. Alternativ ist auch eine zweite Referenzmessung mit einem anderen Referenzziel denkbar, insbesondere einem gleichartigen Referenzziel jedoch ohne Dämpfung.

Der Strahleintrittsbereich und/oder der Strahlaustrittsbereich ist vorzugsweise zumindest in einer Höhenrichtung parallel zur Verbindung von Strahleintrittsbereich und Strahlaustrittsbereich größer als der Querschnitt des ausgesandten Lichtstrahls. Die im Vergleich zu herkömmlichen Referenzzielen vergrößerte Apertur sorgt dafür, dass der ausgesandte Lichtstrahl im Querschnitt zumindest in Höhenrichtung parallel zur Verbindung von Strahleintrittsbereich und Strahlaustrittsbereich, insbesondere auch bei Toleranzen in der Ausrichtung des ausgesandten Lichtstrahls, möglichst vollständig in das Referenzziel gelangt.

Der Laserscanner ist bevorzugt als Entfernungsmesser ausgebildet, indem die Auswertungseinheit die Lichtlaufzeit zwischen Aussenden und Empfang des Lichtstrahls und daraus die Entfernung eines Objekts bestimmt. Damit können wesentlich genauere Objektinformationen gewonnen werden als durch bloße Feststellung der Anwesenheit von Objekten. Die Prüfung der Funktionsfähigkeit anhand des Referenzsignals schließt dann vorzugsweise eine Entfernungsmessung ein, die bei korrekt arbeitendem Laserscanner für das Referenzziel die erwartete Entfernung ergibt.

Vorzugsweise ist eine Winkelmesseinheit zur Erfassung der Winkelstellung der Ablenkeinheit vorgesehen. Insgesamt stehen dann für erfasste Objekte vollständige zweidimensionale Positionskoordinaten zur Verfügung. Im Falle eines räumlich ausgedehnten Überwachungsbereichs wird auch der jeweilige Kippwinkel der Abtasteinheit erfasst, so dass insgesamt dreidimensionale Kugelkoordinaten erhalten werden, welche die Objektposition innerhalb des Überwachungsbereichs ebenfalls vollständig beschreiben.

Der Laserscanner ist bevorzugt als Sicherheitslaserscanner ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Ein Sicherheitslaserscanner ist ein sicherer Laserscanner im Sinne einer Sicherheitsnorm wie einleitend beschrieben und kann deshalb insbesondere zum Personenschutz an Gefahrenquellen eingesetzt werden. Die Referenzzielmessung trägt zur Einhaltung dieser Normen bei. Allerdings bedeutet das keineswegs, dass nicht auch ein nicht in diesem Sinne sicherer Laserscanner von der erfindungsgemäßen Referenzzielmessung profitieren könnte.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2a-b: eine dreidimensionale Ansicht eines Referenzziels für einen Laserscanner aus zwei verschiedenen Perspektiven;
- Fig. 3: eine schematische Darstellung des Strahlengangs an dem Referenzziel gemäß Figur 2a-b;
- Fig. 4: eine vergleichende Darstellung der Intensität des Referenzstrahls für das Referenzziel nach Fig. 2a-b und ein herkömmliches Referenzziel in einem das Referenzziel umgebenden Scanwinkelbereich; und
- Fig. 5a-b: eine dreidimensionale Ansicht eines weiteren Referenzziels für einen Laserscanner aus zwei verschiedenen Perspektiven.

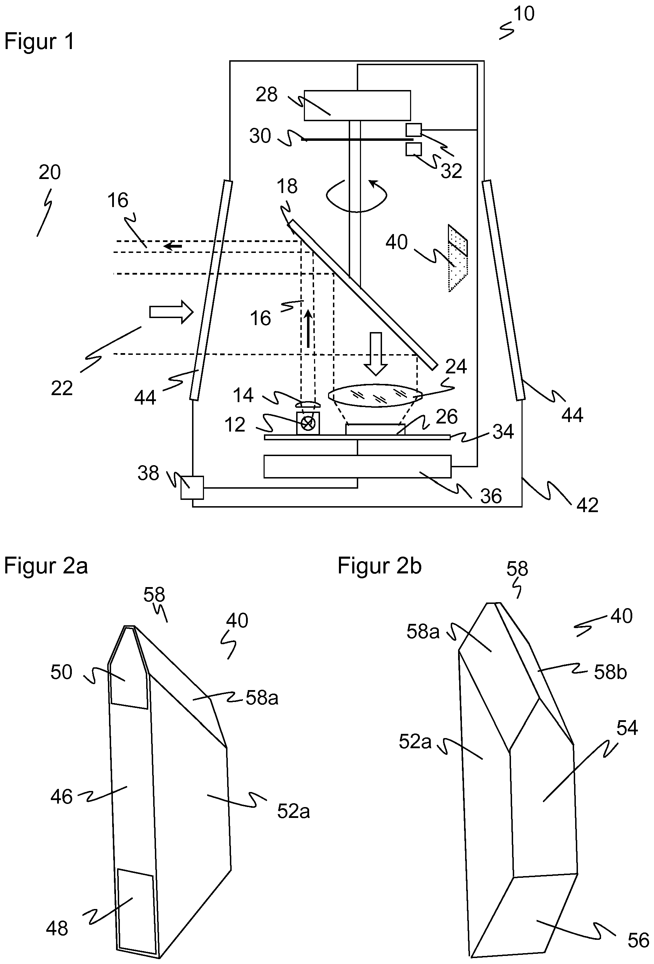

Fig. 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet, der durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt. In der dargestellten Ausführungsform sind Lichtsender 12 und Lichtempfänger 26 auf einer gemeinsamen Leiterkarte 34 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Auswertung erfolgt in einer Auswerteeinheit 36, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 36, ob ein unzulässiges Objekt in einen innerhalb des Überwachungsbereichs 20 festgelegten Schutzbereich eingreift. Ist das der Fall, wird über einen Sicherheitsausgang 38 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. In andern Ausführungsformen ist anstelle des Sicherheitsausgangs 38 oder zusätzlich dazu eine Schnittstelle zur Ausgabe von Messdaten oder beispielsweise zum Parametrieren des Laserscanners 10 vorgesehen.

Ein Referenzziel 40 ist in einem Winkelbereich des Laserscanners 10 angeordnet, der in der Figur 1 gerade um 180° versetzt zu Sendelichtstrahl 16 und remittiertem Licht 22 dargestellt ist. Wenn die Ablenkeinheit 18 im Verlauf ihrer Drehbewegung entsprechende Winkelstellungen einnimmt, verlässt der Sendelichtstrahl 16 den Laserscanner 10 nicht, sondern wird innerhalb des Laserscanners 10 von dem Referenzziel 40 zurückgeworfen. Der Lichtempfänger 26 erzeugt in diesem Fall kein Empfangssignal zum Erfassen von Objekten in dem Überwachungsbereich 20, sondern ein Referenzsignal, das für eine im Folgenden anhand der Figuren 2 bis 5 näher erläuterte Referenzmessung beziehungsweise Funktionsüberprüfung genutzt wird. In dem Winkelbereich, den das Referenzziel 40 einnimmt, liegt ein Totbereich der Messung, so dass der Laserscanner 10 keinen vollen Winkelbereich von 360° erfassen kann. In diesem Totbereich können auch wie dargestellt Leitungen geführt oder bei alternativen Anordnungen des Motors dessen Aufhängung untergebracht sein. Alle genannten Funktionskomponenten sind in einem Gehäuse 42 angeordnet, das im Bereich des Lichtaus- und Lichteintritts eine Frontscheibe 44 aufweist.

Figur 2a-b zeigen eine Ausführungsform des Referenzziels 40 in dreidimensionaler Ansicht. Dabei ist das Referenzziel 40 in Figur 2a von vorne, in Figur 2b von hinten zu sehen, wobei vorne die dem Sendelichtstrahl 16 zugewandte Richtung in Figur 1 bedeutet, also dort die linke Seite.

Das Referenzziel 40 ist insgesamt als Prisma ausgebildet, und wegen seiner geometrischen Gestalt, die an ein perspektivisch verzerrtes Giebeldachhaus erinnert, lässt es sich auch als Dachkantprisma bezeichnen. Es weist eine Vorderfläche 46 mit einem Strahleintrittsbereich 48 und einem Strahlaustrittsbereich 50 auf. Die Seitenflächen 52a-b sind trapezfömig nach hinten verjüngt. Dadurch ist die Rückfläche 54 kleiner als die Vorderfläche 46. Die untere Fläche, welche Vorderfläche 46 und Rückfläche 54 verbindet, ist eine erste Reflexfläche 56. Die gegenüberliegende obere Fläche bildet insgesamt eine zweite Reflexfläche 58, die aber nochmals in zwei Teilflächen 58a-b aufgeteilt ist. In dem Bild eines Giebeldachhauses sind die Teilflächen 58a-b die Dachflächen.

Optisch bildet dies einen langgezogenen Tripelreflektor, wobei die Reflexflächen 56, 58a-b die optisch aktiven Reflektorflächen sind. Um den Effekt eines Tripelreflektors zu erzielen, der einen Strahl zumindest in einem gewissen Winkelbereich unabhängig vom Einstrahlwinkel in sich zurückwirft, stehen die Reflexflächen 56 und die Teilflächen 58a-b vorzugsweise in rechtem Winkel zueinander. Dadurch, dass das Referenzziel 40 keinen üblichen, sondern einen langgezogenen Tripelreflektor bildet, wird ein einfallender Strahl nicht in sich, sondern mit Parallelversatz zurückgeworfen.

An dem Strahlaustrittsbereich 50 ist in einer bevorzugten Ausführungsform ein Mikrolinsenarray angeordnet, welches den austretenden Lichtstrahl aufweitet. Alternativ oder zusätzlich kann auch der Strahleintrittsbereich 48 ein entsprechendes Mikrolinsenarray aufweisen. Andere optische Elemente, wie eine diffuse Streufläche etwa als erodierte Fläche, oder ein DOE (diffraktives optisches Element) mit Aufweitungseffekt sind auch denkbar.

Herkömmlich sind in einem Laserscanner Referenzziele für eine Messung bei hohem und niedrigem Pegel vorgesehen, oder beide Funktionen sind in einem Referenzziel zusammengefasst. Das Referenzziel 40 fungiert nur als Referenzziel für niedrigen Pegel und wird daher beispielsweise definiert geschwärzt. Alternativ wird es durch einen Filter gedämpft, oder es wird für Verluste an den Reflexflächen 56, 58 gesorgt. Gegen Fehler durch zu hohe Signale kann der Laserscanner 10 durch Verwendung eines Pulsmittelungsverfahrens abgesichert werden, bei dem die einzelnen Pulse deutlich schwächer bleiben, oder es werden andere Tests und Maßnahmen zur Absicherung gegen Übersteuerung ergriffen. Die Verwendung eines weiteren Referenzziels für eine Referenzmessung bei starkem Pegel bleibt aber zusätzlich denkbar.

Das Referenzziel 40 kann samt optischem Element an Strahlaustrittsbereich 50 und/oder Strahleintrittsbereich 48 in einem Spritzgussprozess hergestellt werden, insbesondere als einstückiges Bauteil. Werden dabei nach außen gewölbte Mikrolinsen verwendet, können sie in einen Werkzeugeinsatz eingefräst werden. Außerdem sind weitere Funktionselemente im selben Spritzguss denkbar, wie ein nicht gezeigtes Halterungsstück im Bereich zwischen Strahleintrittsbereich 48 und Strahlaustrittsbereich 50.

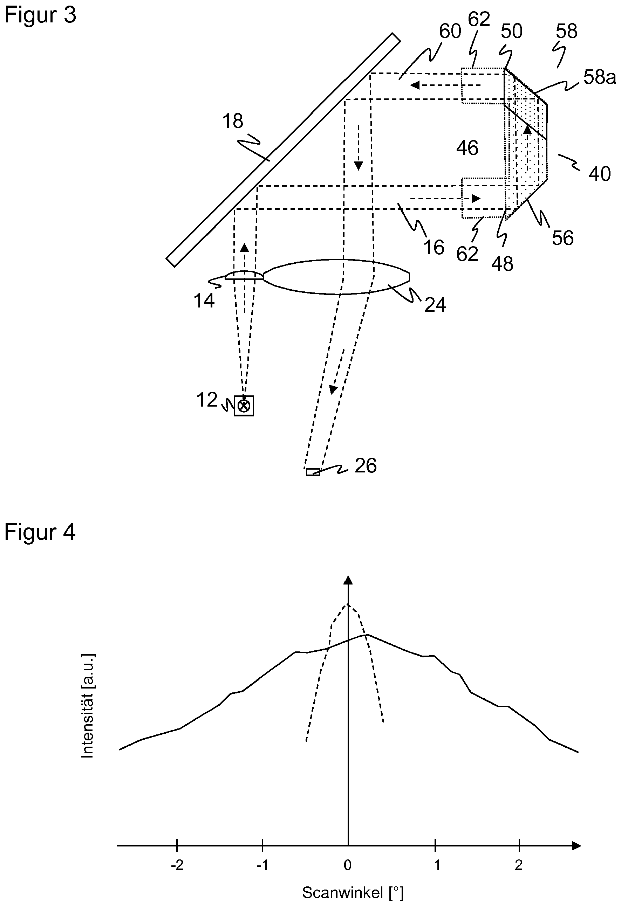

Figur 3 zeigt schematisch den Strahlengang der Referenzmessung. In der entsprechenden Winkelstellung, hier um 180° versetzt zu Figur 1 in einem rückwärtigen Scanwinkelbereich, wird der von dem Lichtsender 12 mittels der Sendeoptik 14 erzeugte Sendelichtstrahl 16 durch die Ablenkeinheit 18 zu dem Referenzziel 40 umgelenkt. Durch den Strahleintrittsbereich 48 dringt der Sendelichtstrahl 16 in das Referenzziel 40 und wird dort an der ersten Reflexfläche 56, der Teilfläche 58a der zweiten Reflexfläche 58 sowie der in Figur 3 verdeckten zweiten Teilfläche 58b wie in einem Tripelreflektor in die Gegenrichtung umgelenkt, um mit einem Parallelversatz als Referenzstrahl 60 das Referenzziel 40 durch den Strahlaustrittsbereich 50 wieder zu verlassen. Der Referenzstrahl 60 gelangt dann über die Ablenkeinheit 18 durch die Empfangsoptik 24 zu dem Lichtempfänger 26.

Zur Erhöhung der Robustheit wird die Divergenz des Sendelichtstrahls 16 an dem Strahleintrittsbereich 48 und/oder die Divergenz des Referenzstrahls 60 an dem Strahlaustrittsbereich 50 vergrößert. Dazu dienen die schon erläuterten Maßnahmen wie ein Linsenarray. Der Lichtempfänger 26 wird deshalb überstrahlt.

Die Aperturen sind im Gegensatz zu einem herkömmlichen Referenzziel vergrößert, weshalb der Sendelichtstrahl 16 zumindest in der Höhe gut durch die Apertur passt, wie in Figur 3 zu erkennen. Durch verschiedene Kombinationen von großen Aperturen, Aufweitung insbesondere durch ein Mikrolinsenarray und die Ausgestaltung des Referenzziels als langgezogener Tripelreflektor kann sichergestellt werden, dass sich Homogenitäts- oder Positionsänderungen im Sendelichtstrahl 16 beispielsweise durch Temperaturschwankungen nicht auf das Referenzsignal auswirken. In Figur 3 ist ein Korridor 62 eingezeichnet, den Sendelichtstrahl 16 beziehungsweise Referenzstrahl 60 je nach Toleranzen im Verlauf des Sendelichtstrahls 16 ohne Beeinflussung des Referenzsignals einnehmen können.

Figur 4 illustriert den erweiterten wirksamen Winkelbereich des Referenzziels 40. Dargestellt ist die Intensität des Referenzsignals in Abhängigkeit von der Winkelposition der Ablenkeinheit 18, wobei 0° eine direkte Ausrichtung auf das Referenzziel 40 bezeichnet. Die durchgezogene Linie zeigt die Intensität für ein erfindungsgemäßes Referenzziel 40, die gestrichelte Linie zum Vergleich diejenige eines herkömmlichen Referenzziels. Der größere wirksame Winkelbereich ist deutlich erkennbar. Das bedeutet, dass bei gleicher Winkelgeschwindigkeit der Ablenkeinheit 18 mehr Zeit für eine oder mehrere Referenzmessungen zur Verfügung steht, die somit genauer wird, oder dass das Referenzziel 40 schmaler gestaltet werden kann und damit weniger Bauraum und Totwinkelbereich beansprucht.

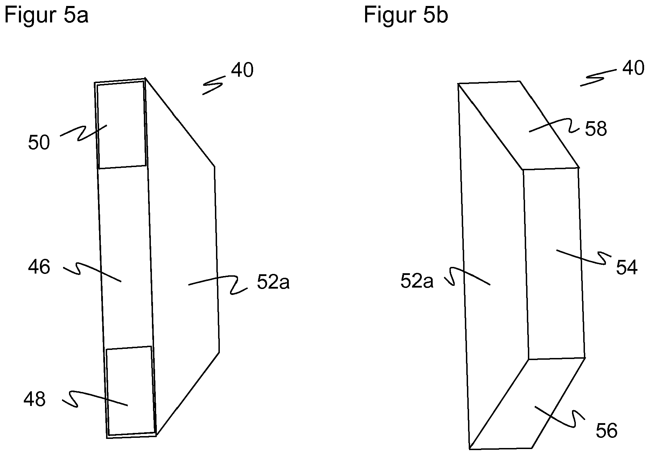

Figur 5 zeigt eine alternative Ausführungsform des Referenzziels 40. Im Unterschied zu Figur 2 ist die zweite Reflexfläche 58 nicht in Teilflächen unterteilt. Dadurch wirkt dieses Referenzziel 40 nicht mehr als langgestreckter Tripelreflektor, sondern nur noch als einfache Umlenkeinheit. Dadurch wird beispielsweise der erweiterte wirksame Winkelbereich gemäß Figur 4 nicht im gleichen Maße erzielt. Durch eine Strahlaufweitung im Strahleintrittsbereich 48 und/oder Strahlaustrittsbereich 50 bleiben aber die Vorteile einer erhöhten Robustheit gegenüber Positions- und Intensitätsschwankungen im Sendelichtstrahl 16 erhalten, und auch der Winkelbereich ist zumindest eingeschränkt erweitert.

## Patentansprüche

1. Laserscanner (10) mit einem Lichtsender (12) zum Aussenden eines Lichtstrahls (16) in einen Überwachungsbereich (20), einem Lichtempfänger (26) zum Erzeugen eines Empfangssignals aus dem von Objekten in dem Überwachungsbereich (20) remittierten Lichtstrahl (22), einer beweglichen Ablenkeinheit (18) zur periodischen Ablenkung des Lichtstrahls (16), um im Verlauf der Bewegung den Überwachungsbereich (20) abzutasten, einem internen Referenzziel (40), das den ausgesandten Lichtstrahl (16) innerhalb des Laserscanners (10) zu dem Lichtempfänger (26) zurückwirft, um ein Referenzsignal zu erzeugen, wobei das Referenzziel (40) ein Prisma mit einer Vorderfläche (46), welche einen Strahleintrittsbereich (48) und einen Strahlaustrittsbereich (50) umfasst, sowie mit einer ersten Reflexfläche (56) und einer zweiten Reflexfläche (58) aufweist, an denen ein in dem Strahleintrittsbereich (48) eintretender Lichtstrahl (16) im Inneren des Prismas zu dem Strahlaustrittsbereich (50) geführt wird, und mit einer Auswertungseinheit (36), die dafür ausgebildet ist, Objekte anhand des Empfangssignals zu erfassen sowie die Funktionsfähigkeit des Laserscanners (10) anhand des Referenzsignals zu prüfen,
wobei die Vorderfläche (46, 48, 50) und/oder mindestens eine der Reflexflächen (56, 58) dafür ausgebildet ist, einen von dem Referenzziel (40) zurückgeworfenen Lichtstrahl (16, 60) aufzuweiten
**dadurch gekennzeichnet,**
**dass** mindestens eine der Reflexflächen (56, 58) zwei in spitzem Winkel zueinander stehende Teilflächen (58a-b) aufweist.

2. Laserscanner (10) nach Anspruch 1,
wobei das Referenzziel (40) zwei trapezförmige Seitenflächen (52a-b) aufweist.

3. Laserscanner (10) nach einem der vorhergehenden Ansprüche,
wobei der Strahleintrittsbereich (48) und/oder der Strahlaustrittsbereich (50) mindestens ein aufweitendes optisches Element aufweist.

4. Laserscanner (10) nach Anspruch 3
wobei das optische Element Mikrolinsen oder eine diffuse Streufläche aufweist.

5. Laserscanner (10) nach einem der vorhergehenden Ansprüche,
wobei das Referenzziel (40) dafür ausgebildet ist, die Intensität eines zurückgeworfenen Lichtstrahls (16, 60) abzuschwächen.

6. Laserscanner (10) nach einem der vorhergehenden Ansprüche,
wobei der Strahleintrittsbereich (48) und/oder der Strahlaustrittsbereich (50) zumindest in einer Höhenrichtung parallel zur Verbindung von Strahleintrittsbereich (48) und Strahlaustrittsbereich (50) größer ist als der Querschnitt des ausgesandten Lichtstrahls (16).

7. Laserscanner (10) nach einem der vorhergehenden Ansprüche,
der als Entfernungsmesser ausgebildet ist, indem die Auswertungseinheit (36) die Lichtlaufzeit zwischen Aussenden und Empfang des Lichtstrahls (16, 22) und daraus die Entfernung eines Objekts bestimmt und/oder wobei eine Winkelmesseinheit (30, 32) zur Erfassung der Winkelstellung der Ablenkeinheit (18) vorgesehen ist.

8. Laserscanner (10) nach einem der vorhergehenden Ansprüche,
der als Sicherheitslaserscanner ausgebildet ist und einen Sicherheitsausgang (38) aufweist, wobei die Auswertungseinheit (36) dafür ausgebildet ist zu bestimmen, ob sich ein Objekt in einem Schutzfeld innerhalb des Überwachungsbereichs (20) befindet, und daraufhin ein sicherheitsgerichtetes Abschaltsignal über den Sicherheitsausgang (38) auszugeben.

9. Verfahren zur Überprüfung der Funktionsfähigkeit eines Laserscanners (10),
der einen Überwachungsbereich (20) abtastet, indem ein ausgesandter Lichtstrahl (16) durch eine sich bewegende, insbesondere drehende Ablenkeinheit (18) periodisch abgelenkt, aus dem von Objekten in dem Überwachungsbereich (20) remittierten Lichtstrahl (22) ein Empfangssignal erzeugt und das Empfangssignal zum Erfassen von Objekten ausgewertet wird, wobei zum Überprüfen der Funktionsfähigkeit ein Referenzsignal ausgewertet wird, das an einem internen Referenzziel (40) erzeugt wird, das ein Prisma mit einer Vorderfläche (46), wo der ausgesandte Lichtstrahl (16) in einen Strahleintrittsbereich (48) eintritt und dazu versetzt in Gegenrichtung aus einem Strahlaustrittsbereich (50) austritt, sowie mit einer ersten Reflexfläche (56) und einer zweiten Reflexfläche (58) aufweist, an denen der Lichtstrahl (16, 60) im Inneren des Referenzziels (40) von dem Strahleintrittsbereich (48) zu dem Strahlaustrittsbereich (50) reflektiert wird,
wobei der ausgesandte Lichtstrahl (16) von der Vorderfläche (46) und/oder mindestens einer der Reflexflächen (56, 58) aufgeweitet wird **dadurch gekennzeichnet,**
**dass** mindestens eine der Reflexflächen (56, 58) zwei in spitzem Winkel zueinander stehende Teilflächen (58a-b) aufweist.

## Claims

1. A laser scanner (10) having a light transmitter (12) for transmitting a light beam (16) into a monitoring region (20), a light receiver (26) for generating a received signal from the light beam (22) remitted by objects in the monitoring region (20), a movable deflection unit (18) for periodically deflecting the light beam (16) to scan the monitored area (20) in the course of movement, an internal reference target (40) which returns the transmitted light beam (16) to the light receiver (26) within the laser scanner (10) in order to generate a reference signal, wherein the reference target (40) comprises a prism with a front surface (46) having a beam entry region (48) and a beam exit region (50), and having a first reflection surface (56) and a second reflection surface (58) where a light beam (16) entering in the beam entry region (48) is guided inside the prism to the beam exit region (50), and having an evaluation unit (36) which is configured to detect objects using the received signal and to check the operability of the laser scanner (10) using the reference signal, wherein the front surface (46, 48, 50) and/or at least one of the reflection surfaces (56, 58) is configured to expand a light beam (16, 60) reflected back from the reference target (40), **characterized in that** at least one of the reflection surfaces (56, 58) has two partial surfaces (58a-b) oriented at an acute angle to one another.

2. The laser scanner (10) according to claim 1,
wherein the reference target (40) has two trapezoidal side surfaces (52a-b).

3. The laser scanner (10) according to any of the previous claims,
wherein the beam entry region (48) and/or the beam exit region (50) comprises at least one expanding optical element.

4. The laser scanner (10) according to claim 3,
wherein the optical element comprises microlenses or a diffuse scattering surface.

5. The laser scanner (10) according to any of the previous claims,
wherein the reference target (40) is configured to attenuate the intensity of a reflected light beam (16, 60).

6. The laser scanner (10) according to any of the previous claims,
wherein the beam entry region (48) and/or the beam exit region (50) is larger than the cross-section of the transmitted light beam (16) at least in a height direction parallel to the connection of the beam entry region (48) and the beam exit region (50).

7. The laser scanner (10) according to any of the previous claims,
which is configured as a distance-measuring apparatus in that the evaluation unit (36) determines the light time of flight between transmission and reception of the light beam (16, 22) and, from that, the distance of an object and/or an angle measuring unit (30, 32) for detecting the angular position of the deflection unit (18) is provided.

8. The laser scanner (10) according to any of the previous claims,
which is configured as a safety laser scanner and comprises a safety output (38), wherein the evaluation unit (36) is configured to determine whether an object is located in a protective field within the monitoring area (20) and to in that case output a safety-related switch-off signal via the safety output (38).

9. A method for checking the operability of a laser scanner (10) which scans a monitoring region (20) by periodically deflecting a transmitted light beam (16) by a moving, in particular rotating, deflection unit (18), generating a received signal from the light beam (22) remitted by objects in the monitoring region (20), and evaluating the received signal for detecting objects, wherein a reference signal is evaluated for checking the operability, which is generated at an internal reference target (40) comprising a prism with a front surface (46) where the transmitted light beam (16) enters in a beam entry region (48) and leaves offset thereto in the opposite direction from a beam exit region (50), and having a first reflection surface (56) and a second reflection surface (58) where the light beam (16, 60) is reflected inside the reference target (40) from the beam entry region (48) to the beam exit region (50), wherein the transmitted light beam (16) is expanded by the front surface (46) and/or at least one of the reflecting surfaces (56, 58),
**characterized in that** at least one of the reflecting surfaces (56, 58) has two partial surfaces (58a-b) oriented at an acute angle to one another.

## Revendications

1. Scanner laser (10) comportant un émetteur de lumière (12) pour transmettre un faisceau lumineux (16) dans une zone de surveillance (20), un récepteur de lumière (26) pour générer un signal reçu à partir du faisceau lumineux (22) remis par des objets dans la zone de surveillance (20), une unité de déviation mobile (18) pour dévier périodiquement le faisceau lumineux (16) pour balayer la zone contrôlée (20) pendant le mouvement, une cible de référence interne (40) qui renvoie le faisceau lumineux émis (16) au récepteur de lumière (26) à l'intérieur du scanner laser (10) afin de générer un signal de référence, dans lequel la cible de référence (40) comprend un prisme avec une surface avant (46) ayant une région d'entrée (48) et une région de sortie (50) du faisceau, et comportant une première surface de réflexion (56) et une seconde surface de réflexion (58) dans lesquelles un faisceau lumineux (16) pénétrant dans la zone d'entrée de faisceau (48) est guidé à l'intérieur du prisme vers la zone de sortie de faisceau (50), et comportant une unité d'évaluation (36) qui est conçue pour détecter des objets en utilisant le signal reçu et pour vérifier le fonctionnement du scanner laser (10) en utilisant le signal de référence, où la surface avant (46, 48, 50) et/ou au moins une des surfaces de réflexion (56, 58) est conçue pour étendre un faisceau lumineux (16, 60) renvoyé par la cible de référence (40), **caractérisé en ce qu'**au moins l'une des surfaces de réflexion (56, 58) présente deux surfaces partielles (58a-b) orientées l'une par rapport à l'autre selon un angle aigu.

2. Le scanner laser (10) selon la revendication 1,
dans lequel la cible de référence (40) a deux surfaces latérales trapézoïdales (52a-b).

3. Le scanner laser (10) selon l'une des revendications précédentes,
dans lequel la région d'entrée de faisceau (48) et/ou la région de sortie de faisceau (50) comprend au moins un élément optique expansible.

4. Le scanner laser (10) selon la revendication 3,
dans lequel l'élément optique comprend des microlentilles ou une surface de diffusion diffuse.

5. Le scanner laser (10) selon l'une des revendications précédentes,
dans lequel la cible de référence (40) est configurée pour atténuer l'intensité d'un faisceau lumineux réfléchi (16, 60).

6. Le scanner laser (10) selon l'une des revendications précédentes,
dans lequel la région d'entrée de faisceau (48) et/ou la région de sortie de faisceau (50) est plus grande que la section transversale du faisceau lumineux transmis (16) au moins dans une direction de hauteur parallèle à la connexion de la région d'entrée de faisceau (48) et la région de sortie de faisceau (50).

7. Le scanner laser (10) selon l'une des revendications précédentes,
qui est configuré en tant qu'appareil de mesure de distance, en ce que l'unité d'évaluation (36) détermine le temps de vol de la lumière entre l'émission et la réception du faisceau lumineux (16, 22) et, à partir de là, la distance d'un objet et/ou une unité de mesure angulaire (30, 32) pour détecter la position angulaire de l'unité de renvoi (18) est prévue.

8. Le scanner laser (10) selon l'une des revendications précédentes,
qui est configuré en tant que scanner laser de sécurité et comprend une sortie de sécurité (38), l'unité d'exploitation (36) étant configurée pour déterminer si un objet se trouve dans un champ de protection dans la zone de surveillance (20) et pour délivrer dans ce cas un signal d'arrêt de sécurité via la sortie de sécurité (38).

9. Procédé de contrôle du fonctionnement d'un scanner laser (10) qui balaye une zone de surveillance (20) en déviant périodiquement un faisceau lumineux transmis (16) par une unité de déviation (18) mobile, en particulier rotative, générant un signal reçu du faisceau lumineux (22) émis par des objets dans la zone de surveillance (20), et évaluant le signal reçu pour détecter des objets, un signal de référence étant évalué pour contrôler le fonctionnement, qui est généré au niveau d'une cible de référence interne (40) comprenant un prisme avec une surface avant (46) où le faisceau lumineux transmis (16) entre dans une région d'entrée de faisceau (48) et en sort décalé dans la direction opposée à une région de sortie de faisceau (50), et comportant une première surface de réflexion (56) et une seconde surface de réflexion (58) où le faisceau lumineux (16, 60) est réfléchi à l'intérieur de la cible de référence (40) depuis la région d'entrée de faisceau (48) jusqu'à la région de sortie de faisceau (50), le faisceau lumineux émis (16) étant expansé par la surface avant (46) et/ou au moins l'une des surfaces réfléchissantes (56, 58),
**caractérisé en ce qu'**au moins l'une des surfaces réfléchissantes (56, 58) présente deux surfaces partielles (58a-b) orientées l'une par rapport à l'autre selon un angle aigu.
